# EUROPEAN PATENT APPLICATION

(11) **EP 4 362 149 A1**
(43) Date of publication of application: **01.05.2024**
(21) Application number: 22204322.6
(22) Date of filing: 28.10.2022
(51) Int. Cl.: H01M 8/248, H01M 8/043, H01M 8/2404, H01M 8/124, C25B 9/60, H01M 8/2432, B65G 61/00, H01M 8/12

(54) **A TRANSPORT AND TESTING TROLLEY FOR MOVING AND CONDITIONING AND/OR TESTING STACKED ASSEMBLIES OF ELECTROLYSER AND/OR FUEL CELL COMPONENTS, AND ASSOCIATED STATION**

(60) Divisional application: 24150199.8
(71) Applicant: Horiba France SAS, 91120 Palaiseau (FR); HORIBA FuelCon GmbH, 39179 Magdeburg-Barleben (DE)
(72) Inventor: Rachau, Mathias, 39326 Wolmirstedt (DE); Hübner, Stefan, 39365 Ummendorf (DE); TARDIEU, Jérôme, 84290 Saint Roman de Malegarde (FR)
(74) Representative: Cabinet Nony

(57) **Abstract**

The invention relates to a transport and testing trolley (1) for moving and conditioning and/or testing stacked assemblies of electrolyser and/or fuel cell components. The trolley allows to take stacks immediately at the end of an in-zone production, for example an in-line production, to transport them directly to a conditioning and/or testing station and to implement conditioning and/or testing step(s) of said stacks directly on the trolley, without having to manipulate them before said steps.

## Description

### Field of the invention

The present invention relates to the field of fuel cells and electrolysers containing one or more stacks of individual electrochemical cells.

In particular, the invention relates to the field of solid oxide fuel cells (SOFC) and that of high-temperature electrolysis and that of high-temperature co-electrolysis of carbon dioxide CO₂ and water H₂O as well as CO₂ electrolysis of carbon dioxide CO₂, also using solid oxides (SOEC, acronym for Solid Oxide Electrolysis Cell).

The invention more particularly relates to novel systems for the management of stacks at the end of their manufacturing and assembly process.

Although it is described mainly with reference to the application of high temperature, the invention also applies to any kind of stacks of electrochemical cells for fuel cells and/or for electrolysers, whatever the number of cells.

### Background of the invention

An SOFC fuel cell or an SOEC electrolyser is an electrochemical device consisting of a stack of elementary units each including a solid oxide electrochemical cell, consisting of anode/electrolyte/cathode layers superposed on each other.

In addition, interconnectors are placed in between the cells to ensure both the passage of the electrical current and the circulation of the gases in the vicinity of each cell (injected steam and produced hydrogen and oxygen in an SOEC electrolyser; injected air and hydrogen and produced water in an SOFC cell) and to separate the fuel and air compartments which are the compartments for circulation of the gases.

To perform the high-temperature SOEC electrolysis of steam, typically between 600 and 950°C, H₂O steam is injected into the fuel compartment. Under the effect of the current applied to the cell, dissociation of the water molecules in vapour form takes place at the interface between the hydrogen electrode and the electrolyte: this dissociation produces dihydrogen gas (H₂) and oxygen ions. The dihydrogen is collected and removed at the outlet of the hydrogen compartment. The oxygen ions O²⁻ migrate through the electrolyte and recombine as dioxygen (O₂) at the interface between the electrolyte and the oxygen electrode by receiving electrons from the fuel side through an external power supply. The produced oxygen is removed at the outlet of the air compartment.

To ensure the functioning of an SOFC fuel cell, air (oxygen) is injected into the air compartment and hydrogen is injected into the fuel compartment. The hydrogen H₂ becomes transformed into H⁺ ions and releases electrons which are captured by the fuel electrode.

At the air side, the oxygen O₂ becomes transformed into O²⁻ ions which migrate through the electrolyte to the fuel side where they combine with the H⁺ ions to form H₂O steam. Transfer of the released electrons from the fuel to the air electrode through an external load produces a direct electrical current from the hydrogen/oxygen reaction.

To increase the amount of hydrogen and oxygen produced in the case of SOEC electrolysis or to increase the electrical power provided in the case of an SOFC fuel cell, it is known practice to stack several elementary electrochemical cells on top of each other, separating them with the interconnectors. The received assembly is positioned between two end connection plates which support the power supplies and the gas feeds/collection of an SOEC electrolyser or of an SOFC fuel cell.

Moreover, to improve the quality of the electrical contacts established between the interconnectors and the electrodes, and thus the performance of the abovementioned electrochemical devices, electrical contact members are individually intercalated and arranged on the electrodes. A nickel grid is conventionally used for the contact with the hydrogen electrode, while a Crofer grid is used for the air electrode.

The stacks employed to date, generally use, in each of their stages, seals which must ensure the leak tightness between the single stack layers described above. Advantageous seals were described in patent EP 3078071 B1.

These seals have the feature of requiring thermal and mechanical treatment in order to be become effective for the life-time of the SOEC electrolyser and SOFC fuel cell stacks. The described treatment is typically called 'Stack Sintering' as the stack layers are sintered for a permanent and non-detachable conjunction.

During the described sintering step, a stack of an abovementioned electrochemical device gets shrunk, typically by several centimetres.

After sintering, it is necessary to subject the stack to a conditioning treatment. This electrochemical conditioning step is essential to guarantee the quality of the stacks as well as their adequacy with the expected specifications. This conditioning treatment consists in at least one "reduction" heat treatment step, to place the fuel side of the electrochemical cells in their reduced form, rather than in their oxidized form as they are initially.

This reduction step may be a thermomechanical cycle under gas: a reductive gas for the hydrogen electrode and air or a neutral gas for the oxygen electrode.

A particular heat treatment step was described in patent EP 2870650 B1.

Moreover, once the assembly by stacking of a fuel cell or an electrolyser has been completed, and before its operation, it is necessary to test it. This test phase consists of checking the seals and/or the actual electrical and/or gas production such as expected.

The conditioning and testing steps of stacks such as mentioned above are time consuming.

As an example, a cycle can consist of several sections such as heating up, sintering, reduction, testing and cooling down.

Long cycle times may be a problem in the manufacturing process, notably in a mass-production.

Indeed, the manufacturing process for stacks of fuel cells and/or electrolysers is already scheduled as an in-line production.

And achieving the testing and/or conditioning in situ, i.e., directly at the end of the continuous-flow manufacturing, is incompatible either in terms of time and/or place. That is to say, implementing testing and/or conditioning equipment in the production line would decrease the production rate and/or require a large space dedicated to such equipment.

Thus, there is a need to find a solution to allow the implementation of the testing and/or conditioning of fuel cells and electrolysers at the end of their continuous-flow manufacturing with no impact of this production process.

The invention aims to address all or part of these needs.

### Summary of the invention

The subject of the invention, as one of its aspects, is a transport and testing trolley for moving and conditioning and/or testing stacked assemblies of electrolyser and/or fuel cell components, comprising:
- a movable frame intended to be moved from a production zone of at least one stacked assembly of electrolyser and/or fuel cell components to a conditioning and/or testing station not included in the production zone;
- a support mounted onto or integral with the movable frame comprising at least one top surface area accessible from the exterior by an operator and/or a robot, intended to support the at least one stacked assembly of electrolyser and/or fuel cell components;
- at least one electrical connector mounted onto the movable frame to arrange an external electric connection to the at least one stacked assembly of electrolyser and/or fuel cell components;
- at least one fluid manifold mounted onto the movable frame to recover and/or to feed gases to and/or from the exterior to and/or from at least one stacked assembly of electrolyser and/or fuel cell components.

By "production zone", it has to be understood in the framework of the invention, an in-line production or an R&D zone or more generally any area in which stacks to be tested are manufactured and assembled.

As a preferred embodiment, the trolley comprises at least one heating coil arranged around each top surface area of the support.

As another preferred embodiment, the trolley comprises at least one mechanical load, preferably a pneumatic cylinder, arranged in the movable frame, said mechanical load being movable between an extended position in which the at least one stacked assembly are accessible by an operator and can be put in place or removed from the top surface area and a retracted position in which said mechanical load applies a force on the stacked assembly.

According to this embodiment, the mechanical load can be applied from below while the stack(s) is(are) compressed at the upper side (as well as the lower side by the support) or from the top while the stack(s) is(are) compressed at the lower side by the support.

Existing technical solutions of mechanical load application provide risks for non-vertical force application, by that geometrical stack distortion and/or displacement of the end plates of stacks that may be caused by temperature differences between core and outer furnace areas during conditioning and/or testing step(s).

The solution according to the invention can apply the load vertically to the stacked assembly using a force introduction ball at the top side of the stack in connection with at least two compression plates above and below the force introduction ball. While the lower compression plate lays at the surface of the components of the stacked assembly, the upper compression plate is pulled down by at least two rods along the sides of stack(s) connected with the mechanical load system installed in the movable cart below the at least one stacked assembly of electrolyser and/or fuel cell components. Alternatively, the compression plate can be pulled down to a certain point, but after the compression plate descends and is fixed at a certain position, the stack rises to that position fixed the compression plate. According to another variant, the at least one stacked assembly of electrolyser and/or fuel cell components can be rose up to the compression plate.

By that approach, it is ensured that the compression load is applied exactly in an angle of 90° relative to the stacked assembly of electrolyser and/or fuel cell components in order to achieve an optimal stack geometry. Notably, it allows to adjust the same height or different height for stacks to be tested and/or conditioned. As one possible arrangement, the support comprises four top surface areas arranged at 90° to each other in front view.

The movable frame comprises preferably at least one condensate trap, preferably with pump, arranged in the movable frame to collect all the condensates coming from at least one stacked assembly of electrolyser and/or fuel cell components during their conditioning and/or testing.

As another preferred embodiment, the movable frame is equipped with wheels and/or is configured to accommodate a mobile robotic platform for the displacement of the trolley. Thus, the trolley can be easily and fastly moved from an area of the end of in-zone production of stacks downstream to a stationing area waiting to test the transported stacks or directly to a conditioning and/or testing station.

The invention relates also to a conditioning and/or testing station for, conditioning and/or testing stacked assemblies of electrolyser and/or fuel cell components, comprising:
- at least one gantry on which is mounted at least one conditioning and/or testing furnace, e.g., in the form of a hood being fixed or movable between an extended position in which at least one transport and testing trolley such as described above can be put in place or removed and a retracted position in which said hood recovers said trolley in a conditioning and testing configuration;
- at least one fluid and electricity management box for the supply and/or the recovery of gases and the supply and/or the recovery of electricity intended to be respectively connected to the fluid manifold and to the electrical connector of a transport and testing trolley such as described above, when in the conditioning and/or testing configuration.

As a possible configuration, the station comprises a common gantry on which are mounted several conditioning and/or testing furnaces each in the form of a hood.

Preferably, each hood is moved vertically by translation along the gantry from the extended position to the retracted position and vice-versa.

The conditioning and/or testing station can also be implemented to sinter the at least one stacked assembly of electrolyser and/or fuel cell components.

The invention relates also to a conditioning and/or testing installation for conditioning and/or testing stacked assemblies of electrolyser and/or fuel cell components comprising:
- at least one trolley such as previously described;
- at least one station such as previously described either the trolley and/or the support and/or the hood being movable such that said hood recovers said trolley in a conditioning and/or testing configuration.

In other words, the invention consists essentially in a trolley to take stacks immediately at the end of an in-zone production, for example an in-line production, to transport them directly to a conditioning and/or testing station and to implement conditioning and/or testing step(s) of said stacks directly on the trolley, without having to manipulate them before said steps.

In the framework of the invention, the trolley and the installation can be implemented to sinter stacked assemblies of electrolyser and/or fuel cell.

The invention also provides a stack load control station intended to cooperate with at least one trolley according to the invention.

The invention concerns also a conditioning and/or testing installation such as previously described for conditioning and/or testing stacked assemblies of electrolyser and/or fuel cell components.

The invention has numerous advantages over what exists, among which mention may be made of:
- a greatly improved downtime for preparation for conditioning and/or testing stacks for fuel cells or electrolysers directly at the exit of in-zone production and eventually for sintering said stacks;
- an improvement of efficiency of test and/or condition steps of stacks;
- an improvement of the working conditions for operators at the exit of in-zone production;
- an optimisation of the ground surface of factories manufacturing electrolysers and/or fuel cells;
- the lack of a risk of break of components (stacks), since the trolley according to the invention minimizes manipulations of such components;
- a great modularity that is easily able to adapt to various in-zone productions, various conditioning and/or testing conditions and various type of technologies (PEM, SOEC, SOFC,...) of stacked assemblies;
- the possibility to arrange some stacks in separate conditioning and testing trolleys and installations, with a common gas for all the stacks;
- the possibility to measure and evaluate multiple types of stacks at the same time;
- the possibility to arrange and test and/or condition small stacks in series and/or large stacks in parallel in one or more trolleys.

Other advantages and characteristics of the invention will be more readily apparent from a perusal of the detailed description of examples of embodiment of the invention, provided for guidance only and without limiting intent, with reference to the drawings below.

### Brief description of the drawings

The invention will be able to be better understood on reading the following description of exemplary and non-limiting implementations thereof, and on studying the appended figures in which:
- Figure 1 is a perspective view of a conditioning and testing trolley according to a first embodiment of the invention with a movable frame to be manually displaced;
- Figure 2 is a side view of the trolley according to Figures 1;
- Figure 3 is a top view of the trolley according to Figure 1 and 2;
- Figure 4 is a detail perspective view of the trolley according to Figures 1 to 3, showing the mechanical load strokes as well as the force introduction ball with upper and lower compression plate to apply load vertically to each stack from the top side of it;
- Figure 5 is a detail perspective view of the trolley according to Figures 1 to 3, showing SOEC/SOFC stacks positioned and supported on top surface areas of the support mounted on the movable frame of the trolley, with the various elements surrounding each surface area;
- Figure 6 is a perspective view of an installation including a conditioning and testing trolley which is placed by an operator in a configuration to be electrically and fluidically connected to a complementary fixed station according to the invention;
- Figure 7 is a side view of Figure 6;
- Figure 8 is a perspective view showing several conditioning and testing trolleys with their complementary fixed stations as shown on Figures 6 and 7 to which they have to be electrically and fluidically connected;
- Figure 9 is a perspective view of a variant of unitary stacks which are themselves stacked to be supported by one top surface area of a support of a movable frame of a trolley according to the invention;
- Figure 10 is a side view of a conditioning and testing trolley according to a second embodiment of the invention with a movable frame to be displaced by a mobile robot platform;
- Figure 11 is a top schematic view of a production zone of SOEC/SOFC stacks which end is surrounded by several conditioning and testing trolleys according to the second embodiment and their corresponding stations arranged parallel to each other, on both sides of the production zone.

### Detailed description

Throughout the present application, the terms "vertical", "lower", "upper", "bottom", "top", "below" and "above" should be understood with reference to a trolley according to the invention with SOEC/SOFC stacks arranged horizontally on the support of the movable frame of the trolley.

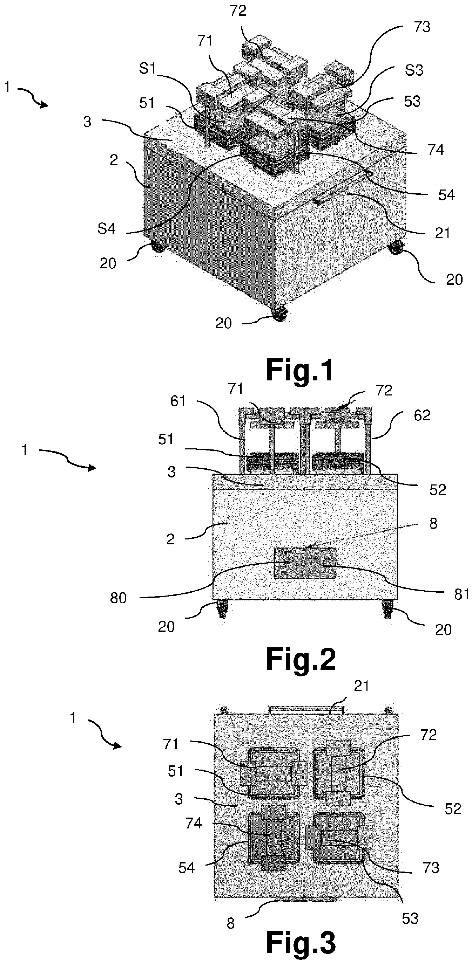

Figures 1 to 5 show one example of a conditioning and testing trolley according to a first embodiment of the invention, denoted overall by the reference 1.

This trolley 1 is intended to move and condition and/or test SOEC/SOFC stacked assemblies S1, S2, S3, S4.

This trolley 1 comprises firstly a movable frame 2 intended to be moved from a production zone of said stacks to a conditioning and/or testing station 10 not included in the production zone, such as described below.

In the shown embodiment, this movable frame 2 is preferably in a general form of a metallic cube and is equipped with four wheels 20 to move said trolley on the ground. A handlebar 21 is arranged on a side of the frame 2 to facilitate its handling from the production zone to the station 10 and vice-versa.

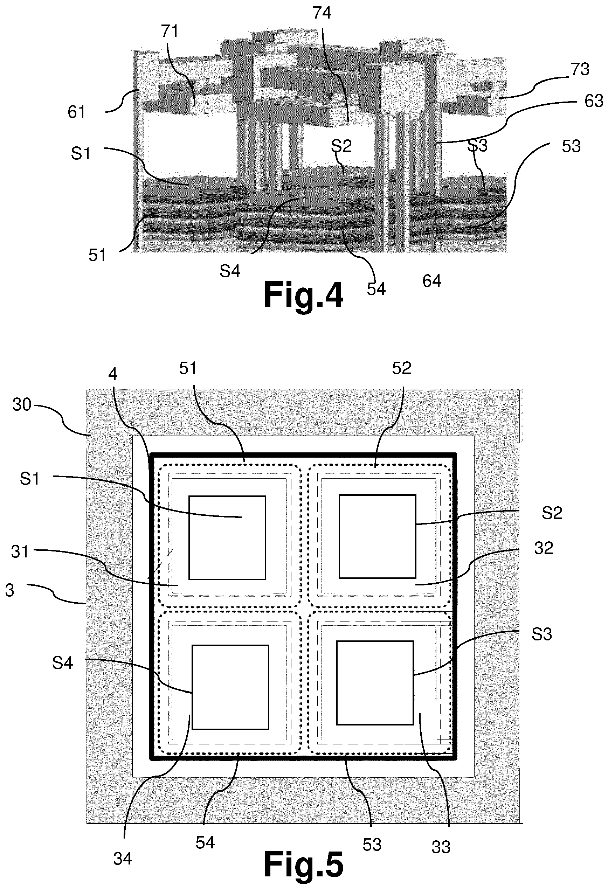

A support 3 is mounted onto or integral with the movable frame 2. As shown on figure 5, this support 3 comprises a peripheral area 30 which is electrically and thermally insulating and four top surface areas 31, 32, 33, 34 accessible from the exterior by an operator and/or a robot.

Each top surface area 31, 32, 33, 34 is intended to support one of the stacked assemblies S1, S2, S3, S4. In the illustrated embodiment, the four top surface areas 31, 32, 33, 34 are arranged at 90° to each other in front view. Each top surface area 31, 32, 33, 34 is configured to let a zone free of any element around each stack S1, S2, S3, S4.

The top surface areas 31 to 34 are surrounded by a common cooling element 4 which can be activated during a conditioning and/or testing step(s). This cooling element 4 allows to accelerate furnace cool down control at the end of a sintering, conditioning and/or testing cycle.

A heating coil 51, 52, 53, 54 is arranged around each top surface area 31, 32, 33, 34 of the support. These heating coils 51 to 54 allows to passively heat gas provided during a conditioning and/or testing step(s).

During a step of conditioning and/or testing an SOEC/SOFC stack, it is generally necessary to apply a compressive force to the stack.

To apply this compressive force directly within the trolley 1, this latter comprises at least one mechanical load system 61, 62, 64, preferably a pneumatic cylinder, arranged in the movable frame 3 per stack S1 to S4.

In the shown embodiment, the mechanical load strokes 61 to 64 apply the load vertically to a stack S1 to S4 from the top side of it through at least one plate 71, 72, 73, 74 forming a mass which surface is at least the surface of a stack S1 to S4.

Each mechanical load stroke 61 to 64 is movable independently between an extended position, shown on Figure 4, in which the stack S1 to S4 is accessible by an operator and can be put in place or removed from the top surface area and a retracted position in which said strokes applies a mechanical load on the stacks S1 to S4. The applied mechanical load may differ from one stack assembly to another stack assembly, namely up to four different loads may be applied to stacks assembly S1 to S4.

To furnish and/or to directly collect the electricity and the different gas, for example H₂, O₂ and eventually draining gas, from and/or towards different stacks S1 to S4 during a conditioning and/or testing step(s), the trolley 1 is equipped with a connector system 8. As shown on Figure 2, this connector system 8 is mounted as a fluidic and electrical feedthrough on a side of the movable frame 3 to respectively recovery and/or to feed gases to and/or from the exterior to and/or from the stacks S1 to S4 and to arrange an external electric connection to said stacks S1 to S4.

More precisely, the connector system 8 comprises at least one electrical connector 80 and at least four fluid manifolds 81 (gases, cooling fluid, water condensate). The fluidic lines and the electrical cables between the connector 80 and the manifolds 81 and the top surface areas 31 to 34 and the different components (cooling element 4, heating coils 51 to 54, pneumatic cylinders 61 to 64, stacks S1 to S4) are not shown: they are arranged into the movable frame 3 in an optimised route configuration.

Preferably, the connector 80 and manifolds 81 are configured to allow an automatic quick connection to make the fluidic and electrical connection between a trolley 1 and a complementary station 10.

As a preferred variant, at least one condensate trap with pump, not shown, can be arranged in the movable frame to collect all the condensates coming from stacks S1 to S4 during their conditioning and/or testing.

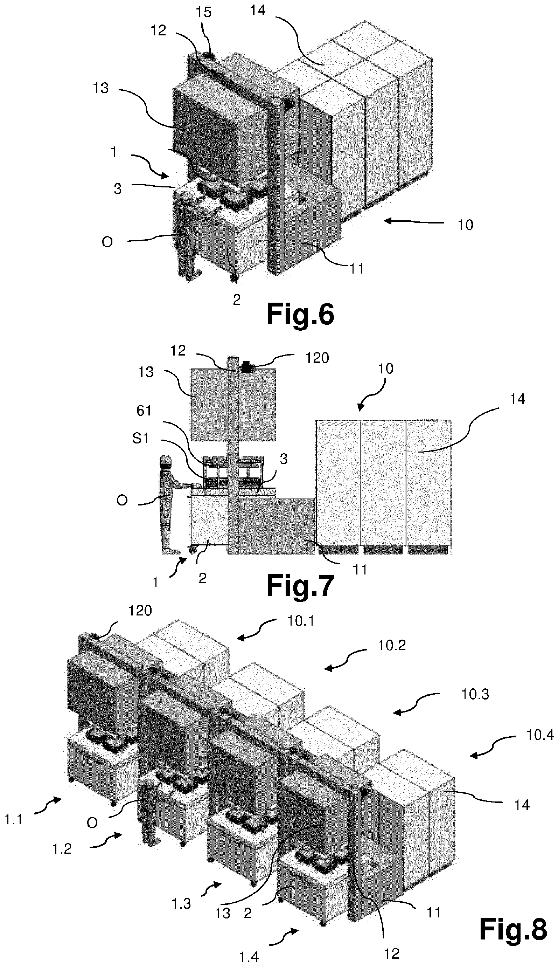

An installation with a unique trolley 1 and its complementary station 10 is shown on Figures 6 and 7. On these Figures 6 and 7, the trolley 1 is in a configuration fluidly and electrically connected to the station 10, in a ready state to launch a conditioning and/or testing step(s) for stacks S1 to S4 embarked by the trolley 1.

A fixed station 10 mainly includes a connecting base 11 in which the trolley 1 is parked, a gantry 12 in front of and above the connecting base 11, a furnace 13 under the form of a hood which is slidably mounted on the gantry 12 and electrical and fluid management cabinets/boxes 14 which are arranged at the rear of the connecting base 13 and electrically and fluidically connected to this latter.

More particularly, the connecting base 11 has a general U form in which the trolley 1 can be introduced up to the electrical and fluidical connection between the connecting system 8 and a complementary connecting system, not shown implemented into the base 11.

The furnace hood 13 is slidably mounted in the gantry 12 to be movable between an extended position in which the trolley 1 can be put in place or removed, such as shown on Figures 6 and 7 and a retracted position in which said connecting base 11 recovers said trolley 1 in a conditioning and testing configuration. More precisely, the hood 13 is mounted on the gantry 12 to be moved vertically by translation along the gantry from the extended position to the retracted position and vice-versa. The hood 13 can be in abutment against the top of the support 3 when its retracted position.

To slide the hood 13 from its extended position to its retracted position, electrical motors 120 arranged on the top of the gantry 12 may be implemented.

The fluid and electricity management cabinets 14 are configured to the supply and/or the recovery of gases and the supply and/or the recovery of electricity intended to be respectively connected to the fluid manifold and to the electrical connector of a transport and testing trolley 1, when in the conditioning and testing configuration. For example, gases and fluids can be cooling water, water condensate.

A control and command unit intended to manage the conditioning and/or testing cycles may be accommodated into one of the cabinets 14.

The sequence of an installation will now be briefly described.

Step a/: The operator O handles a trolley 1 on top surface areas of which stacks S1 and S4 are arranged, up to park the trolley 1 into the base 11 of the station 10.

Preferably, the fluidic and electric connection between the connection system 8 and the one of the base 11 is made simultaneously and automatically to the parking of the trolley 1.

Step b/: The operator O has checked all the stacks S1 to S4 and their fluidic and electric connection

Step c/: The operator O activates the control and command unit to launch the conditioning and/or testing step(s) of stacks S1 to S4.

Step d/: The furnace hood 13 is slid down to reach its retracted position. Alternatively, the furnace hood 13 is fixed and the trolley 1 itself and/or support 3 supporting the stacks S1 to S4 can be rise.

Step e/: The mechanical load is applied to each stack S1 to S4 from the up side by the plates 71 to 74 through the activation of the pneumatic cylinders 61 to 64.

Step f/: A temperature and/or pressure cycle is applied to the stacks S1 to S4 by the control and command unit following the specifications of the conditioning and/or testing conditions.

Step g/: Once the cycle has been made, and a decrease of the temperature has been made, the furnace hood 13 can be slid up to its deployed position. It has to be noted that furnace hood 13 can be moved during active load compression without restrictions and without interfering the load compression.

Then, the trolley 1 can be displaced directly to a zone dedicated of the packaging of the stacks S1 to S4 to be transported outside from the production plant.

In advantageous configuration of an installation, several unitary stations can be arranged in parallel to each other in a dedicated test zone. An example of such configuration is shown on Figure 8 where four stations 10.1 to 10.4 are arranged side by side, each of them being configured to park a trolley 1.1 to 1.4. A unique operator O may handle all these trolleys and implement the conditioning and/or testing step(s). It can be foreseen to have a common control and command unit for all the stations 10.1 to 10.4.

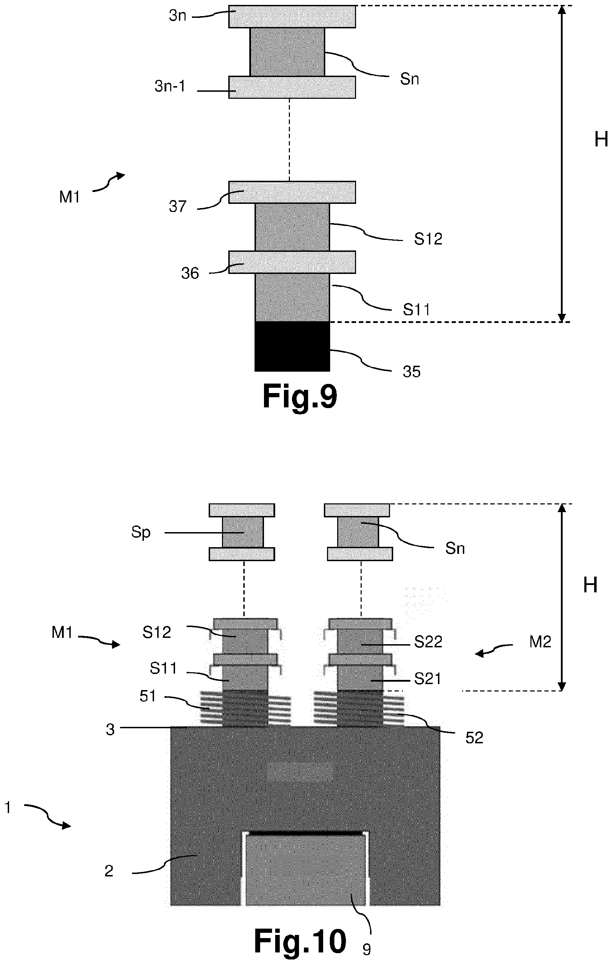

Another advantageous variant is illustrated on Figures 9 and 10: instead of having only one stack per surface area 31 to 34, several stacks S11 to Sn; S21 to Sp can be themselves previously stacked to constitute preassembly modules M1; M2 to be placed on each surface area 31 to 34. More precisely, in the shown embodiment, a module M1 is a preassembly of three stacks S11, S12, S13..Sn of electrochemical cells with interconnectors, the bottom stack S11 being sandwiched by two end plates 35, 36 whereas the intermediate stack S12 is sandwiched by two end plates 36, 37 and the top stack S13 is sandwiched by two end plates 3n, 3n-1. For example, if a stack S11 to Sn includes typically 25 electrochemical cells, a module M1 includes n x25 electrochemical cells. Each module M1, M2 can be conditioned and/or tested onto a given surface area 31, 32.

For displacing a trolley 1 according to the invention, another embodiment may be envisaged instead of simple wheels 20. Thus, a mobile robotic platform 9 may be arranged beneath the movable frame 2 of the trolley 1 such as shown on Figure 10. This robotic platform 9 may be controlled and commanded in an autonomous way to displace one or more trolleys 1 from a production zone of stacks up to a station 10 to condition and/or test the assembled stacks.

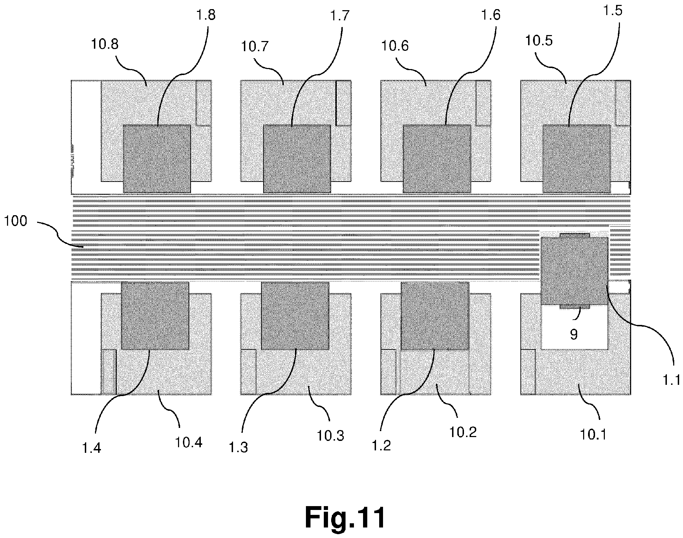

An advantageous configuration of a production zone with conditioning and/or testing trolleys and stations arranged around in shown on Figure 11. In that configuration, eight stations 10.1 to 10.8 are arranged side by side and at each longitudinal side of the production zone 100. From this zone, manufactured and assembled stacked can be handled, for example by automatic lifting robot, to a trolley 1.1. Once the stacks S1 to S4 are embarked in the top area 31 to 34 of the movable frame 2, the mobile robotic platform 9 can be displaced from the charging position, i.e. near the zone 100 up to the connection position with the dedicated station 10.1 arranged in on optimized place. This configuration 11 can automize completely the production and conditioning and/or testing installation of SOEC/SOFC stacks.

Other variants and enhancements can be provided without in any way departing from the framework of the invention.

For example, if the illustrated embodiments show four areas on the support top of a unique trolley which are each intended to support one stack, it could be foreseen of course only one or more four areas.

In the illustrated embodiments, a furnace hood is vertically slidably mounted onto the gantry from its deployed position to its retracted position. Other displacement mechanisms for the hood can be envisaged, like a rotation mechanism.

Also in the illustrated embodiments, the furnace hood is movable to recover a trolley in a conditioning and/or testing configuration. But it can be also foreseen to have a fixed furnace hood while the trolley and/or the support can be movable up to achieve a conditioning and/or testing configuration and down once the conditioning and/or testing step(s) has (have) been made. Also, both movable furnace hood and trolley can be envisaged to achieve a conditioning and/or testing configuration.

It could be also envisaged to mechanically couple several trolleys according to the invention to optimize their displacement in function of the specifications.

A movable frame of a trolley according to the invention may accommodate any other components which are useful for the conditioning and/or testing step(s) to be implemented on the stacks directly on the trolley. For example, separate heat exchangers for fuel side and/or for air (oxygen) side for each stack embarked on the trolley may be integrated into the movable frame. Any sensor/detector, like pressure, temperature sensor may be also integrated into the frame.

The expression "comprising a" should be understood to be synonymous with "comprising at least one", unless otherwise specified.

## Claims

1. A transport and testing trolley (1) for moving and conditioning and/or testing stacked assemblies of electrolyser and/or fuel cell components, comprising:
- a movable frame (2) intended to be moved from a production zone of at least one stacked assembly of electrolyser and/or fuel cell components to a conditioning and/or testing station not included in the production zone;
- a support (3) mounted onto or integral with the movable frame comprising at least one top surface area (30) accessible from the exterior by an operator and/or a robot, intended to support the at least one stacked assembly of electrolyser and/or fuel cell components;
- at least one electrical connector (80) mounted onto the movable frame to arrange an external electric connection to the at least one stacked assembly of electrolyser and/or fuel cell components;
- at least one fluid manifold (81) mounted onto the movable frame to recover and/or to feed gases to and/or from the exterior to and/or from at least one stacked assembly of electrolyser and/or fuel cell components.

2. A transport and testing trolley according to claim 1, comprising at least one heating coil arranged around each top surface area of the support.

3. A transport and testing trolley according to claim 1 or 2, comprising at least one mechanical load, preferably a pneumatic cylinder, arranged in the movable frame, said mechanical load being movable between an extended position in which the at least one stacked assembly are accessible by an operator and can be put in place or removed from the top surface area and a retracted position in which said cylinder applies a mechanical load on the stacked assembly.

4. A transport and testing trolley according to claim 3, wherein the mechanical load applies the load vertically to the stacked assembly from the top side of it using a force introduction ball at the top side of the stack in connection with at least two compression plates above and below the force introduction ball.

5. A transport and testing trolley according to any of the preceding claims, wherein the support comprising four top surface areas arranged at 90° to each other in front view.

6. A transport and testing trolley according to any of the preceding claims, comprising at least one condensate trap, preferably with pump, arranged in the movable frame to collect all the condensates coming from at least one stacked assembly of electrolyser and/or fuel cell components during their conditioning and/or testing.

7. A transport and testing trolley according to any of the preceding claims, wherein the movable frame is equipped with wheels and/or is configured to accommodate a mobile robotic platform for the displacement of the trolley.

8. A conditioning and/or testing station for sintering, conditioning and/or testing stacked assemblies of electrolyser and/or fuel cell components, comprising:
- at least one gantry on which is mounted at least one conditioning and/or testing furnace, e.g. in the form of a hood, the hood being fixed or movable between an extended position in which at least one transport and testing trolley according to any of the preceding claims can be put in place or removed and a retracted position in which said hood recovers said trolley in a conditioning and/or testing configuration;
- at least one fluid and electricity management box for the supply and/or the recovery of gases and the supply and/or the recovery of electricity intended to be respectively connected to the fluid manifold and to the electrical connector of a transport and testing trolley according to any of the preceding claims, when in the conditioning and/or testing configuration.

9. A conditioning and/or testing station according to claim 8, comprising a common gantry on which are mounted several conditioning and/or testing furnaces each in the form of a hood.

10. A conditioning and/or testing station according to claim 8 or 9, wherein each hood is mounted on the gantry to be moved vertically by translation along the gantry from the extended position to the retracted position and vice-versa.

11. A conditioning and/or testing station according to any of claims 8 to 10, wherein said station is implemented to sinter the at least one stacked assembly of electrolyser and/or fuel cell components.

12. A conditioning and/or testing installation for sintering, conditioning and/or testing stacked assemblies of electrolyser and/or fuel cell components comprising:
- at least one trolley according to any one of claims 1 to 7;
- at least one station according to any one of claims 8 to 11, either the trolley and/or the support and/or the hood being movable such that said hood recovers said trolley in a conditioning and/or testing configuration.

13. Use of a conditioning and/or testing installation according to claim 12 for conditioning and/or testing stacked assemblies of electrolyser and/or fuel cell components.
